Europäisches Patentamt

European Patent Office

Office européen des brevets

(19)

(11) Veröffentlichungsnummer: **0 021 016**
**B1**

(12) # EUROPÄISCHE PATENTSCHRIFT

(45) Veröffentlichungstag der Patentschrift:
16.03.83

(51) Int. Cl.³: **G 01 C 21/22**, G 01 C 21/14

(21) Anmeldenummer: **80102721.0**

(22) Anmeldetag: **16.05.80**

(54) **Kartengerät für Fahrzeuge.**

(30) Priorität: 09.06.79 DE 2923452
24.11.79 DE 2947470

(43) Veröffentlichungstag der Anmeldung:
07.01.81 Patentblatt 81/1

(45) Bekanntmachung des Hinweises auf die Patenterteilung:
16.03.83 Patentblatt 83/11

(84) Benannte Vertragsstaaten:
**DE FR GB IT NL**

(56) Entgegenhaltungen:
**CH-A-127 313**
**DE-A-2 625 597**
**DE-A-2 641 437**
**DE-B-1 548 399**
**FR-A-2 357 022**
**FR-A-2 412 123**

(73) Patentinhaber: **ROBERT BOSCH GMBH, Postfach 50,
D-7000 Stuttgart 1 (DE)**

(72) Erfinder: **Scholl, Hermann, Dr., Tubizer Strasse 28,
D-7015 Korntal (DE)**
Erfinder: **Bertling, Hannes, Dr. Dipl.-Ing., Lärchenweg 26,
D-7143 Vaihingen (DE)**

Kartengerät für Fahrzeuge

Die Erfindung betrifft ein Kartengerät nach der Gattung des Hauptanspruchs. Derartige Kartengeräte sind z.B. aus der DE-A-2 625 597 und aus der DE-A-2 641 437 bekannt. Bei diesen bekannten Kartengeräten wird die Vorwärtsfahrt des Fahrzeuges, insbesondere auch Kurvenfahrten, auf eine Kartendarstellung übertragen. Dies erfolgt beispielsweise in Abhängigkeit der Lenkradbewegung und der Drehbewegung der Fahrzeugräder. Die Erfassung beider Parameter ist zum einen sehr aufwendig und führt weiterhin im Normalfall zu einer Überbestimmung, da der Strassenverlauf in der Karte festgelegt ist. Treten nun Abzweigungen auf, so erhöhen sich die Probleme, die in den genannten Entgegenhaltungen nicht angesprochen sind.

Das erfindungsgemässe Kartengerät mit den kennzeichnenden Merkmalen des Hauptanspruchs hat demgegenüber den Vorteil, dass durch die automatische Umschaltung zwischen Streckenbetrieb und Kreuzungsbetrieb im Normalfall, also im Streckenbetrieb, die Strassendarstellung in einfachster Weise in Abhängigkeit der erfassten Fahrzeuggeschwindigkeit abgetastet wird, also durch einen einzigen Parameter. Nach der automatischen Erkennung einer Strassenkreuzung oder Strasseneinmündung erfolgt eine automatische Umschaltung auf die Erfassung eines zusätzlichen Parameter, nämlich die zusätzliche Berücksichtigung von die Fahrtrichtung des Fahrzeuges anzeigenden Signalen. Die Wirkung dieser Fahrtrichtungssignale wird dann nach der Strassenkreuzung wieder abgeschaltet. Der Fahrer des Fahrzeugs braucht dabei in keiner Weise einzugreifen, so dass er sich ganz auf den Strassenverkehr konzentrieren kann. Da hierdurch die Messwerte für die Fahrtrichtung nur kurzzeitig benötigt werden, können sich Fehler der diese Messwerte liefernden Geber nicht in störender Weise aufsummieren, und es können sehr einfache und billige Geber verwendet werden. Beispielsweise kann die Fahrtrichtung durch Radsensoren ermittelt werden, obwohl derartige Radsensoren wegen unterschiedlichen Schlupfes nicht immer völlig genaue Werte liefern. Derartige Radsensoren sind bei Fahrzeugen mit Antiblockiersystemen bereits vorgesehen. Als Geber für den zurückgelegten Weg, bzw. die Fahrzeuggeschwindigkeit können auch Tachometerwellen-Sensoren verwendet werden. Natürlich können für Spezialfälle auch aufwendigere Fahrtrichtungsgeber, wie z.B. ein Kreiselkompass verwendet werden.

Durch die in den Unteransprüchen aufgeführten Massnahmen sind vorteilhafte Weiterbildungen und Verbesserungen des im Hauptanspruch angegebenen Kartengeräts möglich.

Besonders vorteilhaft ist es, den Detektor entsprechend dem technischen Merkmal, durch das sich die Strassendarstellung von der übrigen Karte abhebt, geeignet zu wählen. So können die Strassenzüge durch elektrisch oder magnetisch abtastbare Markierungen gekennzeichnet sein. Bevorzugt ist jedoch vorgesehen, dass sich die Strassendarstellung von der übrigen Karte durch ihre Farbe und/oder Helligkeit abhebt. Auch die bei einer der oben geschilderten Ausführungsformen vorgesehene Markierung der Strassenkreuzungen und -Einmündungen kann in geeigneter Weise, beispielsweise magnetisch oder elektrisch oder auch durch eine optisch abtastbare Markierung bewirkt sein. Zum Abtasten einer Strassendarstellung, die sich von der übrigen Karte durch Farbe und/oder Helligkeit abhebt, weist gemäss einer Ausführungsform die Detektorvorrichtung mindestens eine Fotodiode auf. Durch geeignete optische Massnahmen wird das Kartenbild am Ort der angezeigten Position von der Fotodiode abgetastet, und wenn die Fotodiode infolge seitlicher Abweichung den optischen Kontakt mit der Strassendarstellung verliert oder wenn sich ein derartiger Vorgang ankündigt, wird durch eine geeignete Steuerung die angezeigte Position auf die Strassendarstellung zurückgeführt.

Bei einer anderen Ausführungsform weist der Detektor mindestens zwei im Abstand angeordnete Detektorelemente auf, im speziellen Fall also zwei Fotodioden. Hierbei ist zweckmässigerweise die Anordnung so getroffen, dass die beiden Fotodioden nebeneinander in Querrichtung zur Strasse liegende Punkte der Karte abtasten, wobei zweckmässigerweise jede der Dioden noch einen Bereich der Strassendarstellung erfasst. Bei einer seitlichen Abweichung wird das Ausgangssignal der einen Diode daher beispielsweise infolge einer grösseren gemessenen Helligkeit zunehmen und das andere entsprechend abnehmen, und aus diesen beiden Signalen ist die Richtung, in der die angezeigte Position von der Strasse wegwandert, unmittelbar erkennbar, und es kann die Korrektur veranlasst werden.

Damit die beiden Detektorelemente oder Dioden ständig im wesentlichen quer zur Richtung der gerade befahrenen Strasse auf der Karte die Kartendarstellung abtasten, ist vorgesehen, die im Fahrzeug ermittelte Fahrtrichtung (bezogen auf die Himmelsrichtungen) dazu zu benutzen, die beiden Detektorelemente ständig quer zur Fahrtrichtung, bezogen auf die Umgebung der angezeigten Position auf der Karte, auszurichten. Für Strassenfahrzeuge wird von den möglichen Arten der Richtungsanzeige auf der Kartendarstellung derjenigen mit einer nord-orientierten Karte der Vorzug gegeben, auch wegen der Möglichkeit, auf der Karte enthaltene Ortsbezeichnungen ständig leicht ablesen zu können, und es wird daher ein Richtungspfeil oder eine andere Richtungsanzeige, die durch das Gerät dem Benutzer vermittelt wird, je nach der eingeschlagenen Fahrtrichtung die Richtung ändern. Demzufolge wird in Abhängigkeit von dieser im Gerät ermittelten Fahrtrichtung die Detektoranordnung so orientiert, dass die oben geschilderte Abtastung der Strasse quer zur Strassenrichtung erfolgt.

2

Es ist vorteilhaft, die Kartendarstellung auf einem transparenten Träger vorzusehen und auf eine Mattscheibe zu projizieren. Bei einer derartigen Ausführungsform ist erfindungsgemäss vorgesehen, einen Teil des Strahlengangs auszukoppeln und diejenige Stelle der Kartendarstellung, die der angezeigten Position entspricht, oder die nächste Umgebung dieser Stelle auf die Fotodioden abzubilden. Vorteilhaft ist hierbei, dass am Ort der Fotodioden eine Belichtungsstärke in der gewünschten Grösse ohne Schwierigkeiten erzeugt werden kann. Besonders vorteilhaft ist es, wenn vor die Dioden ein geeignetes Farbfilter geschaltet ist, das den Kontrast zwischen der Strassendarstellung und der übrigen Kartendarstellung verstärkt.

Wenn gemäss einer Ausführungsform ein Richtungspfeil in die auf der Mattscheibe erscheinende Kartendarstellung einblendbar ist, ist eine Ausführungsform der Erfindung vorteilhaft, bei der der Richtungspfeil auf einem drehbaren Träger und die Fotodiodenanordnung ebenfalls auf einem drehbaren Träger angeordnet ist, und die beiden Träger sind synchron durch einen geeigneten Antriebsmotor, vorzugsweise einen Schrittmotor, in Abhängigkeit von Steuersignalen angetrieben; bei dieser Ausführungsform wird mit einfachen Mitteln sichergestellt, dass die Diodenanordnung den Strassenverlauf der Kartendarstellung immer in einer Richtung abtastet, die quer zur Fahrtrichtung, die durch den Richtungspfeil angezeigt wird, verläuft. Bei einer Ausführungsform der Erfindung ist die drehbare Detektoranordnung und der auf der Mattscheibe abzubildende drehbare Pfeil auf einem Schlitten angeordnet, der in zwei verschiedenen Richtungen verschiebbar geführt ist. Der Vorteil liegt hierbei darin, dass die Lage des Abtastpunkts der Detektoranordnung relativ zu den Grenzen der auf der Mattscheibe sichtbaren Kartendarstellung zur Anzeige der jeweiligen Position des Fahrzeugs geändert werden kann, wobei der Richtungspfeil, beispielsweise dessen Ende, jeweils die Position anzeigt. Eine derartige Art der Darstellung kann Vorteile bieten gegenüber der anderen erfindungsgemässen Ausführungsform, bei der die jeweilige Position des Fahrzeugs beispielsweise immer mit der Mitte der Mattscheibe übereinstimmt und eine Änderung der Position dadurch angezeigt wird, dass der die Kartendarstellung enthaltende Träger verschoben wird oder in anderer Weise eine Verschiebung des auf der Mattscheibe sichtbaren Teils der Kartendarstellung erfolgt. Es kann zweckmässig sein, bei einem einzigen Gerät die beiden Arten der Positionsanzeige vorzusehen, damit der Benutzer diese wahlweise benutzen kann.

Unabhängig davon, ob die Positionsanzeige ihre Lage relativ zu den äusseren Begrenzungen der auf der Mattscheibe sichtbaren Kartendarstellung ändert oder nicht, kann es vorteilhaft sein, eine Verschiebung des transparenten Trägers der Kartendarstellung in zwei unterschiedlichen Richtungen vorzusehen. Dies bietet den Vorteil, dass auf einem einzigen transparenten Träger, der vorzugsweise in der Art der bekannten Diapositive ausgebildet ist, ein relativ grosses Gebiet in Form einer Kartendarstellung gespeichert werden kann, von dem auf der Mattscheibe durch eine geeignet ausgebildete Optik jeweils immer nur ein kleiner Ausschnitt in ausreichend starker Vergrösserung sichtbar ist. Nähert sich das Fahrzeug dem Rand des auf der Mattscheibe dargestellten Gebiets, so wird durch eine Steuervorrichtung das Diapositiv entsprechend verschoben, so dass die angezeigte Position im Bereich der Mattscheibe bleibt, sofern auf dem Diapositiv der vom Fahrzeug befahrene Bereich überhaupt abgebildet ist.

Vorteilhafterweise ist das Gerät zur Aufnahme mehrerer Diapositive ausgebildet und weist eine Einrichtung zum Abtasten von Markierungen auf den Diapositiven auf, die unabhängig davon abtastbar sind, ob sich das Diapositiv gerade im Strahlengang der Projektionseinrichtung befindet. Die Diapositive können zweckmässigerweise in einem Magazin nach Art der üblichen Diaprojektoren gespeichert sein und an ihrem Rand, insbesondere an ihrem Rahmen, Markierungen aufweisen, vorzugsweise Kerben, die beim Einschieben eines gefüllten Magazins ins Gerät von einem Kontaktsatz abgetastet werden. Die dabei gewonnenen Informationen können in einen elektronischen Speicher eingegeben werden, in dem dann die Information darüber, welches Diapositiv sich an welcher Stelle des Magazins befindet, gespeichert ist. Durch diese Massnahme wird verhindert, dass der Benutzer die Diapositive in einer ganz bestimmten Reihenfolge ins Magazin einsetzen muss. Die Diapositive enthalten Kartendarstellungen unterschiedlicher Gebiete. Das Einschieben eines Diapositivs in den Strahlengang der Projektionseinrichtung kann durch Betätigung einer Auswahleinrichtung durch den Benutzer, der beispielsweise eine Kenn-Nummer des gewünschten Diapositivs ins Gerät eintastet, erfolgen, oder aber auch automatisch in Abhängigkeit von der im Gerät festgestellten Position. Hierfür ist es lediglich erforderlich, dass bei Inbetriebnahme des Geräts darauf geachtet wird, dass sich ein derartiges Positiv im Strahlengang befindet, auf dem die wahre Position des Fahrzeugs angezeigt werden kann, wobei diese Position zumindest bei der ersten Inbetriebnahme des Geräts von Hand auf der projizierten Kartendarstellung eingestellt wird.

Bei einer Ausführungsform der erfindungsgemässen Diapositive, die sich für das erfindungsgemässe Gerät eignen, ist die Bildfläche des Diapositivs in unterschiedliche Felder unterteilt, und es sind auf dem Diapositiv durch Abtasteinrichtungen lesbare Markierungen, die den Feldern zugeordnet sind, vorgesehen. Diese Markierungen können durch die oben genannten Markierungen am Rand des Diapositivs gebildet sein, und/oder durch optisch ablesbare Markierungen, die auf den einzelnen Feldern angeordnet sind.

Diese optisch abtastbaren Markierungen können durch in nächster Nähe der einzelnen Felder vorgesehene Linienmuster gebildet sein, die sich im wesentlichen über die ganze Länge der einzelnen Ränder erstrecken, so dass sie an jeder Stelle ablesbar sind. Diese Markierungen werden im Gerät dann abgelesen, wenn die angezeigte Position sich dem Rand des Feldes nähert. Die in den Markierungen enthaltene Information gibt zweckmässigerweise eine Angabe darüber, an welcher Stelle des gleichen Diapositivs oder auf welchem anderen Diapositiv und an welcher Stelle dieses Diapositivs sich die Kartendarstellung der Anschlusskarte befindet. Die Markierungen können auch Informationen über den Massstab der jeweiligen Kartendarstellung enthalten. Ausserdem können diese Markierungen dazu dienen, ein Koordinatensystem für das einzelne Feld zu definieren, von dem aus nach dem Wechsel eines Diapositivs dann, wenn die Anschlusskarte projiziert wird, die tatsächliche Position des Fahrzeugs auf dieser Anschlusskarte durch die Positionsanzeige markiert wird.

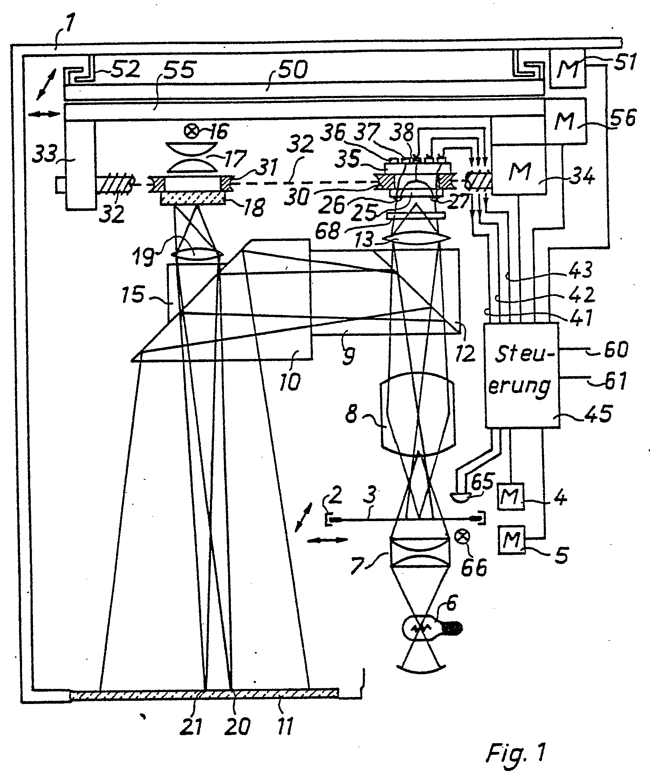

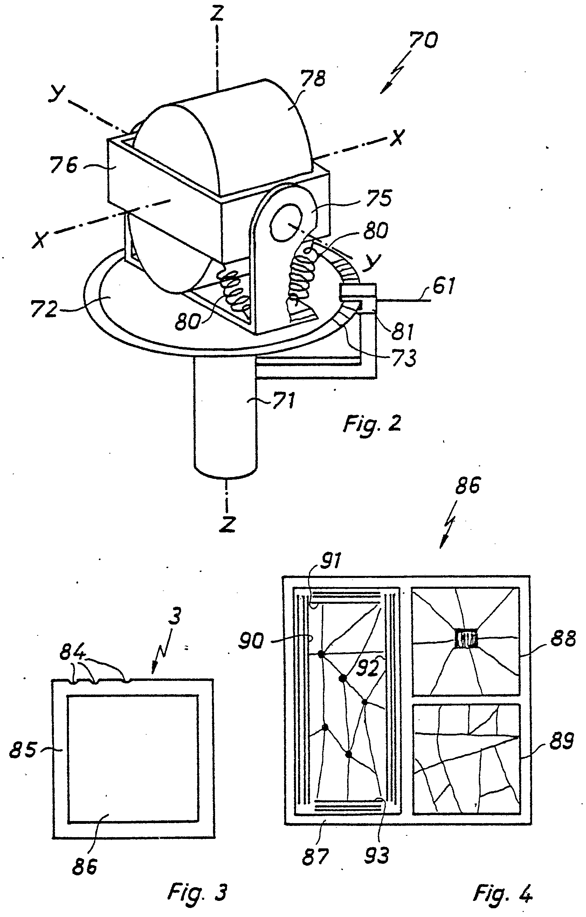

Ausführungsbeispiele der Erfindung sind in der Zeichnung dargestellt und in der nachfolgenden Beschreibung näher erläutert. Es zeigen Fig. 1 ein erstes Ausführungsbeispiel eines erfindungsgemässen Geräts in einer schematisierten, nichtmassstäblichen Darstellung, Fig. 2 eine vereinfachte Darstellung eines mit dem Gerät nach Fig. 1 verwendeten einfachen Kreiselkompasses, Fig. 3 die Ansicht eines gerahmten Diapositivs und Fig. 4 die Aufteilung der Bildfläche des Diapositivs nach Fig. 3.

In einem Gehäuse 1 ist eine Halterung 2 für ein gerahmtes Diapositiv 3 angeordnet, die durch Schrittmotoren 4 und 5 in der angedeuteten Weise in der Ebene der Zeichnung von links nach rechts und senkrecht zur Zeichenebene von vorne nach hinten verschiebbar ist. Eine Lampe 6, ein Kondensor 7, eine Linse 8 und zwei Prismen 9 und 10, an denen der das Diapositiv 3 durchsetzende Lichtstrahl zweimal um 90° abgelenkt wird, bilden eine Projektionseinrichtung, die den vom Lichtstrahl durchsetzten verhältnissmässig kleinen Bereich des Diapositivs auf einer Mattscheibe 11 abbilden, so dass der Benutzer des Geräts in der Fig. 1 von unten her den durchstrahlten Abschnitt des Diapositivs, der eine Strassenkarte zeigt, betrachten kann. Mittels eines Prismas 12 kann ein Teil des von der Linse 8 kommenden Lichts ausgekoppelt werden und gelangt zu einer Sammellinse 13. Mittels eines Prismas 15 kann ein von einer Lampe 16 über einen Kondensor 17 kommender Lichtstrahl in den vom Diapositiv 3 kommenden Lichtstrahl eingekoppelt werden. Hinter dem Kondensor 17 ist ein Träger 18 aus Glas abgebildet, der einen nichtdargestellten Bildträger trägt, der als Bild einen durchsichtigen Richtungspfeil in sonst undurchsichtiger Umgebung trägt. Das von der Lampe kommende Licht durchsetzt den Träger 18 und projiziert somit über die Linse 19 das Bild des Richtungspfeils auf die Mattscheibe 11. Im Ausführungsbeispiel ist die Lage der Spitze des Richtungspfeils mit 20 bezeichnet, das Ende des Richtungspfeils ist mit 21 bezeichnet und liegt zufällig gerade in der optischen Achse des Projektionssystems. Das Ende des Richtungspfeils kennzeichnet gleichzeitig die Position des Personenkraftwagens, in den das Gerät eingebaut ist, auf der projizierten Strassenkarte.

Der aus dem Lichtstrahl durch das Prisma 12 ausgekoppelte Strahl gelangt zu einem Träger 25, der zwei im Abstand angeordnete Fotodioden 26 und 27 trägt, deren Verbindungslinie genau rechtwinklig zur Richtung des auf dem Träger 18 angeordneten Richtungspfeils verläuft; zur besseren Darstellung ist jedoch in Fig. 1 der auf dem Träger 18 angeordnete Richtungspfeil um 90° verdreht dargestellt, so dass die von seiner Spitze und seinem Ende ausgehenden Strahlenbüschel in die Fig. 1 eingezeichnet werden konnten. Der Träger 25 ist mit einem Schneckenrad 30 verbunden, und der Träger 18 ist mit einem Schneckenrad 31 verbunden, deren Durchmesser und Zahnteilung gleich gross ist und die mit einer einzigen Schnecke 32 in Eingriff sind, so dass sie bei der Rotation der Schnecke 32 sich gleichsinnig drehen. Die Schnecke 32 ist auf ihrer in Fig. 1 linken Seite in einem Lager 33 gehalten und auf ihrer rechten Seite durch einen Schrittmotor 34 angetrieben. Auf der dem Träger 25 abgewandten Seite des Schneckenrads 30 sind auf einer Isolierschicht 35 ein äusserer Schleifring 36, ein innerer Schleifring 37 und ein zentrisch in der Mitte liegender Schleifkontakt 38 angeordnet, wobei zwei Anschlüsse der Fotodioden 26 und 27 gemeinsam mit dem Kontakt 38 verbunden sind und von den beiden anderen Dioden je ein Anschluss zum äusseren und inneren Schleifring 36 bzw. 37 geführt ist. Mit den Schleifringen und dem mittleren Kontakt 38 wirken in der Zeichnung angedeutete Schleifkontakte zusammen, von denen elektrische Leitungen 41 bis 43 zu einer Steuereinheit 45 führen.

Am Gehäuse 1 ist an dessen Rückseite, die in Fig. 1 oben liegt, in der angedeuteten Weise eine Platte 50 mittels eines Schrittmotors 51 unter Verwendung von Schiebeführungen 52 senkrecht zur Zeichenebene hin- und herbewegbar, und an der Platte 50 ist eine Platte 55 in nicht näher dargestellter Weise so gelagert, dass sie durch einen Schrittmotor 56 in der Darstellung der Fig. 1 von links nach rechts bewegt werden kann. Die Platte 55 trägt das Lager 33 und den Motor 34, ausserdem sind an der Platte 55 in nicht näher dargestellter Weise die Lampe 16 und der Kondensor 17 befestigt und die mittels der Schnecke 32 drehbaren Einrichtungen 18, 31 und 30, 25, 35 drehbar gelagert.

Die Steuereinrichtung 45 weist eine weitere Eingangsleitung 60 auf, die zum Anschluss an einen Fahrtgeschwindigkeitsgeber bestimmt ist, und eine Leitung 61, die zum Anschluss an einen Fahrtrichtungsgeber bestimmt ist; als Geber ist hier der in Fig. 2 dargestellte Kreiselkompass vorgesehen.

Das Diapositiv 3 trägt optisch abtastbare Markierungen, die durch weitere Fotodioden abgetastet werden. In Fig. 1 ist lediglich eine derartige weitere Fotodiode 65 dargestellt, deren Ausgangsleitungen mit der Steuereinrichtung 45 verbunden ist, und die mit einer auf der anderen Seite des Diapositivs 3 angeordneten Lampe 66 zusammenwirkt.

Das in Fig. 1 gezeigte Gerät kann in der Weise betrieben werden, dass eine Verschiebung der Platten 50 und 55 mittels der Motoren 51 und 56 nicht erfolgt, so dass das Ende des Richtungspfeils auf der Mattscheibe 11 ständig in der optischen Achse 21 liegt. Da dieses Ende des Richtungspfeils die augenblickliche Position anzeigen soll, wird bei dieser Betriebsweise das Diapositiv 3 durch die Motoren 4 und 5 in Abhängigkeit von der Fahrtrichtung und der zurückgelegten Wegstrecke so verschoben, dass die augenblickliche Position sich ständig in der optischen Achse 21 befindet. Hierbei verändert sich also während der Fahrt ständig der auf der Mattscheibe 11 sichtbare Kartenausschnitt. Das Gerät kann auch so betrieben werden, dass der sichtbare Kartenausschnitt zumindest während geraumer Fahrtzeiten und Fahrtstrecken unverändert bleibt, und dass stattdessen das Ende des Richtungspfeils auf der Mattscheibe 11 wandert und auf der projizierten Kartendarstellung die augenblickliche Position anzeigt. Hierzu werden die Platten 55 und 50 durch die Motoren 51 und 56, die von der Steuereinrichtung 45 gesteuert sind, entsprechend verschoben. Ausserdem wird bei beiden Betriebsarten bei einer Änderung der Fahrtrichtung, die durch den Kreiselkompass erkannt wird, durch den Schrittmotor 34 die Schnecke 32 gedreht, und es werden daher die Schneckenräder 30 und 31 mit den auf ihnen befestigten Anordnungen entsprechend gedreht, so dass der Richtungspfeil auf der projizierten Kartendarstellung ständig die Fahrtrichtung anzeigt.

Die Kartendarstellung mit der Darstellung der Strassenzüge ist farblich so angelegt, dass sie vom Benutzer auf der Mattscheibe 11 leicht erkannt werden kann, und dass ausserdem mit Hilfe der Fotodioden 26, 27 erkannt werden kann, wenn die auf der Kartendarstellung angezeigte Position vom Verlauf einer Strasse seitlich abweicht. Die Dioden 26 und 27 sind so angeordnet und die mit diesen zusammenwirkende optische Einrichtung ist so ausgelegt, dass zwei Punkte auf dem Diapositiv 3, deren Abstand etwas kleiner ist als die kleinste in der Darstellung verwendete Breite bei der Darstellung von Strassenzügen, noch auf die beiden Fotodioden abgebildet werden. In der Fig. 1 sind die hierzu gehörenden Strahlenläufe nur schematisch dargestellt. Bei einer seitlichen Abweichung der angezeigten Position von der Strasse wird daher das Bild der Strasse zunächst von der einen Fotodiode herunterwandern. Je nachdem, ob die Strasse oder die übrigen Bereiche der Kartendarstellung am Ort der Dioden 26, 27 eine höhere Beleuchtungsstärke bewirken, wird daher bei der genannten Fotodiode die Beleuchtungsstärke abnehmen oder zunehmen, und das hierdurch bewirkte elektrische Signal wird der Steuereinrichtung 45 zugeführt und veranlasst diese, durch Verschiebung der Halterung 2 oder durch Verschiebung der Platten 50, 55 die angezeigte Position relativ zu einer projizierten Kartendarstellung so zu verschieben, dass diese Position wieder auf die abgebildete Strasse fällt. Wenn das auf der Mattscheibe 11 sichtbare Kartenbild zwar deutliche Farbkontraste, aber keine grösseren Helligkeitskontraste aufweist, können derartige Helligkeitskontraste am Ort der Fotodioden 26 und 27 durch ein in den Strahlengang geschaltetes Farbfilter 68 erzeugt werden. Es ist zweckmässig, die Helligkeit der auf der Mattscheibe 11 sichtbaren Strassenzüge und auch der übrigen Kartenteile nicht allzu gross zu machen, damit der eingeblendete Richtungspfeil sich von der projizierten Karte deutlich abhebt.

Der in Fig. 2 gezeigte Kreiselkompass 70 weist einen Tragbolzen 71 auf, der im Fahrzeug drehfest so verankert wird, dass seine Längsachse (Achse z) senkrecht verläuft. An dem Bolzen 71 ist eine waagrecht angeordnete Kreisscheibe 72, die an ihrem Rand ringsum in gleichmässigen Abständen Markierungen 73 trägt, um die Achse z drehbar befestigt. Auf der Scheibe 72 ist ein U-förmiger Bügel 75 starr befestigt, der um eine waagrechte Achse y schwenkbar einen Käfig 76 trägt, in dem um eine zur Achse y rechtwinklig und waagrecht verlaufende Achse x der Kreisel 78 drehbar gelagert ist. Der Kreisel 78 enthält einen elektrischen Antriebsmotor; die elektrischen Leitungen zu diesem Motor sind nicht dargestellt. Der Käfig 76 ist durch zwei Federn 80 mit dem Joch des Bügels 75 verbunden, so dass sich die Achse x dann, wenn sie aus ihrer zur Ebene der Scheibe 72 parallelen Lage ausgelenkt worden sein sollte, nach einiger Zeit wieder zu dieser Ebene parallel stellt. Ein die Markierungen 73 abtastender Sensor 81 ist starr mit dem Fahrzeug, nämlich dem Bolzen 71 verbunden, dessen Ausgang mit der Leitung 61 zur Steuereinrichtung 45 verbunden ist. Der Sensor 81 liefert somit Inkrementsignale für die Drehbewegung des Sensors 81 relativ zur Scheibe 72. Der in Fig. 2 gezeigte verhältnismässig einfache Kreiselkompass kann geringe Fehler in der Richtungsanzeige infolge von auftretender Reibung bewirken, ausserdem dann, wenn beispielsweise das Fahrzeug von einem ebenen Streckenabschnitt auf einen ansteigenden Streckenabschnitt gerät und dabei die Achse y nicht genau in Längsrichtung des Fahrzeugs steht, so dass sich beim Übergang auf den ansteigenden Streckenabschnitt infolge der Bewegung des Fahrzeugs um seine Querachse un infolge des Beharrungsvermögens der Kreisels 78 die Drehachse x schräg zur Ebene der Scheibe 72 einstellt. Bei dieser Verschwenkung erfolgt noch keine Fehlanzeige der Fahrtrichtung, jedoch dann, wenn sich das Fahrzeug auf diesem ansteigenden Streckenabschnitt so lange befindet, dass inzwischen der Käfig 76 durch die Federn 80 wieder parallel zur Ebene der Scheibe 72 eingestellt wird. Durch diese Rückverschwenkung des Käfigs 76 wird eine Präzessionsbewegung des Kreisels 78 bewirkt, die eine Verdrehung des Bügels 76 um die senkrechte Achse z bewirkt. Die hierdurch bewirkte fehlerhafte Anzeige der Fahrtrichtung, die bei geeigneter Dimensionierung des Geräts klein gehalten werden kann, wird dann automatisch korrigiert, wenn infolge dieser vom tatsächlichen Strassenverlauf abweichenden Richtungsanzeige die auf der Kartendarstellung angezeigte Position vom tatsächlichen Strassenverlauf abweicht.

Fig. 3 zeigt in vereinfachter Darstellung ein Diapositiv, das in bekannter Weise einen Rahmen 85 aufweist, in dem ein transparenter Bildträger 86 gehalten ist, auf dem eine oder mehrere Kartendarstellungen stark verkleinert enthalten sind, die durch die Optik des Geräts in geeigneter Vergrösserung auf der Mattscheibe 11 abgebildet werden. Der Rahmen 85 hat im Ausführungsbeispiel die für Diapositive üblichen Abmessungen, nämlich eine Kantenlänge von 5 cm. Am oberen Rand des Diapositivs 3 weist der Rahmen 85 mehrere kerbenförmige Markierungen 84 auf, deren Anzahl und Lage eine Information über die Bildinformation des Diapositivs 3 darstellt. Das Kartengerät ist so ausgebildet, dass es ein Magazin, ähnlich wie es bei bekannten Projektionsgeräten verwendet wird, mit mehreren Diapositiven 3 aufnehmen kann; die Diapositive 3 werden so angeordnet, dass die Markierungen 84 sämtlicher Diapositive beispielsweise in der Kassette oben liegen, und beim Einschieben der Kassette in das Kartengerät werden die Markierungen 84 durch mechanische Abtaster abgetastet, die die abgelesene Information in einen kleinen elektronischen Speicher eingeben. Aus der im Speicher enthaltenen Information ist daher ständig bekannt, an welcher Stelle des Magazins sich welche Diapositive befinden, und es kann daher ein anderes vom Benutzer gewünschtes oder von einer automatischen Auswahlvorrichtung angefordertes Diapositiv sehr schnell ausgewählt und gegen das gerade projizierte Diapositiv, das in Fig. 1 gezeigt ist, automatisch ausgetauscht werden.

Fig. 4 zeigt gegenüber Fig. 3 vergrössert den Bildträger 86. Der Bildträger 86 ist in mehrere Felder 87, 88 und 89 unterteilt, die unterschiedliche Grösse haben können. Die einzelnen Felder 87 bis 89 sind dazu bestimmt, unterschiedliche Kartendarstellungen aufzunehmen, vorzugsweise Kartendarstellungen in den unterschiedlichen Massstäben, wobei beispielsweise in Feld 87 eine Übersichtskarte im grossen Massstab, im Feld 88 eine Regionalkarte einer im Feld 87 enthaltenen Region und im Feld 89 ein Stadtplan einer in den Feldern 87 und 88 enthaltenen Stadt enthalten ist. In der Nähe der seitlichen Begrenzungen der einzelnen Felder sind parallel zu diesen Rändern verlaufende linienförmige Markierungen 90 bis 93 vorgesehen, die optisch abtastbar sind. Der Raum, den diese Markierungen 90 bis 93 einnehmen, ist zur besseren Darstellung stark übertrieben gezeichnet, in Wirklichkeit können diese Markierungen in sehr schmalen Randstreifen der einzelnen Felder untergebracht werden. Auch die Felder 88 und 89 enthalten derartige Markierungen, die aus Vereinfachungsgründen jedoch nicht dargestellt sind. Der Abstand der einzelnen Linien der Markierungen untereinander und die Zahl dieser Linien enthält eine optisch lesbare Information.

Bisher wurde in der Beschreibung der Ausführungsbeispiele davon ausgegangen, dass die Fahrtrichtung des Fahrzeugs ständig ermittelt wird und zum Steuern der Positionsanzeige verwendet wird, wobei die Detektoreinrichtung lediglich dazu dient, bei auftretenden Fehlern die angezeigte Position wieder auf den Verlauf der Strassendarstellung zurückzuführen. Man kann die Anordnung aber auch so treffen, dass das Entlangführen der angezeigten Position entlang eines Strassenverlaufs der Kartendarstellung ohne Berücksichtigung von Änderung der Fahrtrichtung des Fahrzeugs, selbstverständlich jedoch unter Berücksichtigung der Fahrgeschwindigkeit, automatisch erfolgt, solange hierdurch keine zusätzlichen Fehlermöglichkeiten entstehen, also auf solchen Strecken eines Strassenverlaufs der Kartendarstellung, auf dem keine Strassenkreuzungen oder Strasseneinmündungen vorhanden sind. Im Bereich solcher Kreuzungen und Einmündungen dagegen wird zum Weiterbewegen der Positionsanzeige zusätzlich die Fahrtrichtung des Fahrzeugs (Geradeausfahrt, Rechtsabbiegen oder Linksabbiegen) benutzt, um die Positionsanzeige über den Bereich der Kreuzung oder Einmündung hinwegzuführen und richtig in den der tatsächlich befahrenen Strasse entsprechenden Strassenverlauf der Kartendarstellung einmünden zu lassen. Sobald der Bereich der Kreuzung oder Einmündung verlassen ist, schaltet die Steuervorrichtung wieder um und bewegt die Positionsanzeige entlang der Strassendarstellung lediglich unter Berücksichtigung der Fahrzeuggeschwindigkeit.

Ein Kreuzungsbereich kann beispielsweise dadurch von der Steuervorrichtung erkannt werden, dass beide Ränder eines Strassenverlaufs der Kartendarstellung bei der automatischen Entlangführung der angezeigten Position entlang des Strassenverlaufs abgetastet werden und dass ständig oder in kurzen Zeitabständen geprüft wird, ob die beiden Ränder der Strasse zueinander parallel verlaufen oder ob sie ihren gegenseitigen Abstand plötzlich stark ändern; beispielsweise würde die Steuervorrichtung den Beginn eines Kreuzungsbereichs dadurch erkennen, dass die beiden gegenüberliegenden Ränder der bisher befahrenen Strasse sich in entgegengesetzter Richtung voneinander entfernen.

Wie eingangs bereits erläutert, kann in der Kartendarstellung der Bereich der Kreuzungen und Einmündungen aber auch besonders markiert sein, beispielsweise magnetisch oder durch Farbe oder Kontrast. Wenn sich die Strassendarstellung von der übrigen Kartendarstellung bereits durch ihre Farbe abhebt, kann der Bereich von Kreuzungen und Einmündungen beispielsweise dadurch zusätzlich vom Strassenverlauf abgehoben werden, dass in diesem Kreuzungsbereich eine weitere Farbe vorgesehen ist, die durch einen geeigneten Detektor erkannt werden kann. Es kann hierbei zweckmässig sein, diese weitere Farbe und die den Strassenverlauf kennzeichnende Farbe beispielsweise als genügend enges Punktmuster oder Strichmuster vorzusehen, so dass sowohl die den Strassenverlauf erkennende Detektoreinrichtung als auch die weitere, den Kreuzungsbereich erkennende Detektoreinrichtung, gegebenenfalls unter Verwendung geeigneter Farbfilter, das Vorhandensein der jeweiligen Farbmarkierung erkennen kann.

Das anhand der Fig. 1 beschriebene Gerät kann zur Verwirklichung dieser hier beschriebenen weiteren Ausführungsform so abgewandelt sein, dass aus dem das Diapositiv 3 verlassenden Lichtstrahl ein weiterer Teilstrahl ausgelenkt wird, der durch eine Optik auf eine weitere Fotodiode gelenkt wird, wobei der auf der Fotodiode abgebildete Bereich genau der angezeigten Position der Kartendarstellung entspricht. Gegebenenfalls unter Verwendung eines geeigneten Farbfilters kann hierdurch erkannt werden, ob sich die angezeigte Position im Bereich einer farblich besonders gekennzeichneten Kreuzung oder Einmündung oder aber ausserhalb einer Kreuzung oder Einmündung im normalen Strassenverlauf befindet, und in Abhängigkeit hiervon gibt die genannte Fotodiode ein Signal an die Steuereinrichtung ab. Diese Steuereinrichtung unterscheidet sich von der Steuereinrichtung 45 der Fig. 1 dadurch, dass sie von geeigneten Sensoren gelieferte Fahrtrichtungssignale lediglich dann berücksichtigt, wenn sich die angezeigte Position in einem Kreuzungsbereich befindet. Ausserhalb von Kreuzungsbereichen wird die angezeigte Position nur in Abhängigkeit von der Fahrgeschwindigkeit verändert, wobei die Richtung, in der sich die angezeigte Position entlang einer Strassendarstellung bewegt (es sind hierbei zwei Richtungen möglich) zu Fahrtbeginn und beim Verlassen jedes Kreuzungsbereichs in die Steuereinrichtung eingegeben bzw. von dieser automatisch erfasst wird. Es ist auch eine stark vereinfachte Ausführungsform möglich, bei der im Kreuzungsbereich Fahrtrichtungsänderungen nicht automatisch erfasst werden, sondern der Fahrer Fahrtrichtungsänderungen, beispielsweise mittels einer Tastatur oder durch die Fahrtrichtungsanzeige (Blinker) in das Gerät eingibt.

Man kann gemäss der Erfindung auch Geräte schaffen, die zur Anzeige der Position auf einer z.B. auf Papier gedruckten Landkarte bzw. einem Stadtplan dienen, wobei die Position vorzugsweise durch einen Lichtpunkt auf der Landkarte angezeigt wird. Es können diese Landkarten speziell angefertigt sein, in manchen Fällen dürften auch handelsübliche Landkarten verwendbar sein, die einen ausreichenden Farbkontrast oder Helligkeitskontrast der Strassendarstellung aufweisen.

Das im Kreuzungsbereich die Fahrtrichtung des Fahrzeugs anzeigende Signal kann auch von einem den Lenkradeinschlag anzeigenden Signal oder mittels eines einfachen, seitliche Beschleunigungen erfassende Messsystems abgeleitet sein. Das Abtasten des Strassenverlaufs kann bei geeigneter Kartendarstellung auch mechanisch erfolgen.

## Patentansprüche

1. Kartengerät für Strassenfahrzeuge als Navigationshilfe, mit einer Vorrichtung zum Anzeigen der Position des Fahrzeugs auf einer Kartendarstellung, wobei die Position unter Verwendung von Fahrzeuggeschwindigkeit und Fahrtrichtung ermittelt wird, mit einer eine Detektoreinrichtung (26, 27) enthaltenden Steuervorrichtung (26, 27, 45), die die auf einer Kartendarstellung, die eine Strassendarstellung enthält, angezeigte Position (21) entlang einer Strasse der Kartendarstellung abtastet und in Abhängigkeit der Fahrzeuggeschwindigkeit weiterführt, dadurch gekennzeichnet, dass eine Einrichtung vorgesehen ist, die erkennt, wenn sich die angezeigte Position auf einer Strassenkreuzung oder Strasseneinmündung der Kartendarstellung befindet, und dass dann die Steuervorrichtung zur Berücksichtigung von die Fahrtrichtung des Fahrzeugs anzeigenden Signalen wirksam geschaltet ist.

2. Kartengerät nach Anspruch 1, dadurch gekennzeichnet, dass eine Fotodiode zum Erkennen einer durch Farbe und/oder Helligkeit optisch markierten Kreuzung in der Kartendarstellung vorgesehen ist.

3. Kartengerät nach Anspruch 1 oder 2, dadurch gekennzeichnet, dass bei einer seitlichen Abweichung der angezeigten Position von der Strassendarstellung die Erzeugung eines Korrektursignals veranlasst wird, das zur Korrektur die angezeigte Position auf die Strassendarstellung zurückführt.

4. Kartengerät nach einem der vorhergehenden Ansprüche, dadurch gekennzeichnet, dass ein Kreiselkompass (70) als Fahrtrichtungsgeber vorgesehen ist.

5. Kartengerät nach einem der vorhergehenden Ansprüche, dadurch gekennzeichnet, dass die Detektoreinrichtung mindestens eine Fotodiode (26, 27) aufweist.

6. Kartengerät nach Anspruch 5, dadurch gekennzeichnet, dass die Detektoreinrichtung mindestens zwei Fotodioden (26, 27) aufweist, die derart angeordnet sind, dass sie die Lageänderung der Strassendarstellung relativ zur angezeigten Position in einer Richtung quer zur Fahrtrichtung ermitteln.

7. Kartengerät nach einem der vorhergehenden Ansprüche, dadurch gekennzeichnet, dass die Detektoreinrichtung drehfest angeordnet ist und die Kartendarstellung in Abhängigkeit von der Fahrtrichtung gedreht wird.

8. Kartengerät nach einem der Ansprüche 1 bis 5, dadurch gekennzeichnet, dass die Kartendarstellung drehfest angeordnet ist und die Detektoreinrichtung in Abhängigkeit von der Fahrtrichtung gedreht wird.

9. Kartengerät nach Anspruch 8, dadurch gekennzeichnet, dass eine mit einer Drehvorrichtung (30, 32) der Detektoreinrichtung gekoppelte drehbare Fahrtrichtungsanzeige (18, 31) vorgesehen ist.

10. Kartengerät nach einem der vorhergehenden Ansprüche, dadurch gekennzeichnet, dass die Kartendarstellung auf einem transparenten Träger vorgesehen ist, und dass eine Projektionseinrichtung (6, 7, 8, 9, 10) zum Projizieren der Kartendarstellung vorgesehen ist.

11. Kartengerät nach Anspruch 10, dadurch gekennzeichnet, dass ein Teil des Strahlengangs hinter dem transparenten Träger ausgekoppelt ist und der Detektoreinrichtung zugeführt ist.

12. Kartengerät nach Anspruch 10 oder 11, dadurch gekennzeichnet, dass eine Vorrichtung (16, 17, 18, 19, 15) zum Einblenden eines Richtungspfeils in die projizierte Kartendarstellung vorgesehen ist.

13. Kartengerät nach den Ansprüchen 11 und 12, dadurch gekennzeichnet, dass die Detektoreinrichtung (26, 27) und die zu projizierende Vorlage des Richtungspfeils auf drehbaren Trägern (18, 25) angeordnet sind, und dass die beiden Träger synchron gleichsinnig antreibbar sind.

14. Kartengerät nach Anspruch 13, dadurch gekennzeichnet, dass die Detektoreinrichtung (26, 27) und der Träger (18) des Richtungspfeils an einem Schlitten (55) gelagert sind, der in zwei unterschiedlichen Richtungen linear verschiebbar geführt ist.

15. Kartengerät nach einem der vorhergehenden Ansprüche, dadurch gekennzeichnet, dass es eine Verschiebevorrichtung (4, 5) zum Verschieben eines die Kartendarstellung enthaltenden transparenten Trägers in zwei unterschiedlichen Richtungen aufweist.

16. Kartengerät nach einem der vorhergehenden Ansprüche, dadurch gekennzeichnet, dass ein Magazin zur Aufnahme mehrerer als Diapositive ausgebildeter transparenter Träger, die die Kartendarstellungen enthalten, vorgesehen ist, und dass ein elektronischer Speicher enthalten ist, der mit einer Abtasteinrichtung (65, 66) für Markierungen (84) zur Zuordnung der Träger gekoppelt ist und in dem Informationen darüber gespeichert sind, welches Diapositiv sich an welcher Stelle des Magazins befindet.

17. Kartengerät nach Anspruch 16, dadurch gekennzeichnet, dass die Abtasteinrichtung (65, 66) auf dem Bildträger (86) des Diapositivs (3) enthaltene optisch lesbare Markierungen (90, 91, 92, 93) abtastet.

18. Kartengerät nach Anspruch 17, dadurch gekennzeichnet, dass der Bildträger (86) in mehrere Felder (87, 88, 89) zur Aufnahme unterschiedlicher Kartendarstellungen unterteilt ist, und dass jedes Feld unterschiedliche optisch abtastbare Markierungen aufweist.

19. Kartengerät nach Anspruch 16, dadurch gekennzeichnet, dass die Abtasteinrichtung auf dem Rand (85) des Diapositivs (3) enthaltene Markierungen (84) abtastet.

## Claims

1. Map apparatus in the form of a navigational aid for road vehicles, comprising a device for indicating the position of the vehicle on a map representation wherein the position is detected by using vehicle speed and direction of travel, a control device (26, 27, 45) including a detector device (26, 27) which senses the indicated position (21) on a map representation, which includes a road representation, along a road of the map representation and continues in accordance with the vehicle speed, characterised in that, a device is provided which recognises when the indicated position is located at a road crossing or road junction on the map representation and that the control device is then switched-in effectively for taking into account signals indicating the direction of travel of the vehicle.

2. Map apparatus according to claim 1, characterised in that, a photodiode is provided for recognising an optically marked intersection in the map representation by colour and/or brightness.

3. Map apparatus according to claim 1 or 2, characterised in that, with a lateral deviation of the indicated position from the road representation, the generation of a correction signal is effected which is fed back for correcting the indicated position on the road representation.

4. Map apparatus according to one of the preceding claims, characterised in that, a gyrocompass (70) is provided as an indicator of the direction of travel.

5. Map apparatus according to one of the preceding claims, characterised in that, the detector device has at least one photodiode (26, 27).

6. Map apparatus according to claim 5 characterised in that, the detector device has at least two photodiodes (26, 27) which are so arranged that they detect the change in position of the road representation relatively to the indicated position in a direction transverse to the direction of travel.

7. Map apparatus according to one of the preceding claims, characterised in that, the detector device is non-rotatably arranged and the road representation is rotated in accordance with the direction of travel.

8. Map apparatus according to one of claims 1 to 5, characterised in that, the road representation is non-rotatably arranged and the detector device is rotated in accordance with the direction of travel.

9. Map apparatus according to claim 8, characterised in that, a rotatable direction of travel indicator is provided, coupled to a rotary device (30, 32) of the detector device.

10. Map apparatus according to one of the preceding claims, characterised in that, the map representation is provided on a transparent carrier and that a projection device (6, 7, 8, 9, 10) is provided for projecting the map representation.

11. Map apparatus according to claim 10, characterised in that, a portion of the beam path beyond the transparent carrier is removed and is passed to the detector device.

12. Map apparatus according to claim 10 or 11, characterised in that, a device (16, 17, 18, 19, 15) is provided for introducing a direction arrow into the projected map representation.

13. Map apparatus according to claims 11 and 12, characterised in that, the detector device (26, 27) and the original of the direction arrow to be projected are arranged on rotatable carriers (18, 25) and that the two carriers can be driven synchronously in the same sense.

14. Map apparatus according to claim 13, characterised in that, the detector device (26, 27) and the carrier (18) for the direction arrow are mounted on a carriage (55) which is guided for displacement in two different directions.

15. Map apparatus according to one of the preceding claims, characterised in that, it has a displacement device (4, 5) for displacing a transparent carrier including the map representation, in two different directions.

16. Map apparatus according to one of the preceding claims, characterised in that, a magazine is provided for receiving a plurality of transparent carriers, which include the map representations, in the form of diapositives, and that an electronic memory is included which is coupled to a sensing device (65, 66) for markings (84) for the co-ordination of the carriers and in which items of information are stored as to which diapositive is located in which position in the magazine.

17. Map apparatus according to claim 16, characterised in that, the sensing device (65, 66) senses optically readable markings (90, 91, 92, 93) contained on the image carrier (86) of the diapositive (3).

18. Map apparatus according to claim 17, characterised in that, the image carrier (86) is subdivided into a plurality of fields (87, 88, 89) for receiving different map representations and that each field has different markings which can be sensed optically.

19. Map apparatus according to claim 16, characterised in that, the sensing device senses markings included at the edge (85) of the diapositive (3).

## Revendications

1. Appareil à cartes servant à assister la circulation de véhicules urbains, avec un dispositif pour indiquer la position du véhicule sur une représentation cartographique, cette position étant déterminée en utilisant la vitesse du véhicule et sa direction de déplacement, avec un dispositif de commande (26, 27, 45) comprenant une installation de détection (26, 27), ce dispositif analysant sur une représentation cartographique, comportant une représentation des rues, la position (21) indiquée le long d'une rue de cette représentation cartographique et assurant le guidage ultérieur en fonction de la vitesse du véhicule, appareil caractérisé en ce qu'il est prévu une installation qui détecte si la position indiquée se trouve à un croisement de rues ou bien à un débouché de rues de la représentation cartographique, ce dispositif de commande étant alors branché de façon opérationnelle pour tenir compte des signaux indiquant la direction de déplacement du véhicule.

2. Appareil à cartes selon la revendication 1, caractérisé en ce qu'il est prévu une photo-diode pour détecter sur la représentation cartographique un croisement repéré optiquement par des couleurs et/ou une luminosité.

3. Appareil à cartes selon l'une quelconque des revendications 1 et 2, caractérisé en ce que lors d'une déviation latérale de la position indiquée à partir de la représentation des rues, la production d'un signal de correction est provoquée, ce signal ramenant aux fins de correction la position indiquée sur la représentation des rues.

4. Appareil à cartes selon l'une quelconque des revendications 1 à 3, caractérisé en ce qu'un compas gyroscopique (70) est prévu en tant qu'indicateur de la direction du déplacement.

5. Appareil à cartes selon l'une quelconque des revendications 1 à 4, caractérisé en ce que l'installation de détection comporte au moins une photo-diode (26, 27).

6. Appareil à cartes selon la revendication 5, caractérisé en ce que l'installation de détection comporte au moins deux photo-diodes (26, 27) disposées de façon telle qu'elles déterminent la modification de position de la représentation des rues par rapport à la position indiquée dans une direction transversale par rapport à la direction de déplacement.

7. Appareil à cartes selon l'une quelconque des revendications 1 à 6, caractérisé en ce que l'installation de détection est disposée fixe en rotation tandis que la représentation cartographique tourne en fonction de la direction de déplacement.

8. Appareil à cartes selon l'une quelconque des revendications 1 à 5, caractérisé en ce que la représentation cartographique est disposée fixe en rotation tandis que l'installation de détection tourne en fonction de la direction de déplacement.

9. Appareil à cartes selon la revendication 8, caractérisé en ce qu'il est prévu une indication de vitesse de rotation susceptible de tourner et couplée avec un dispositif d'entraînement en rotation (30, 32) de l'installation de détection.

10. Appareil à cartes selon l'une quelconque des revendications 1 à 9, caractérisé en ce que la représentation cartographique est prévue sur un support transparent, tandis qu'il est prévu une installation de projection (6, 7, 8, 9, 10) pour projeter la représentation cartographique.

11. Appareil à cartes selon la revendication 10, caractérisé en ce qu'une partie du trajet du faisceau derrière le support transparent est découplée et amenée à l'installation de détection.

12. Appareil à cartes selon l'une quelconque des revendications 10 et 11, caractérisé en ce qu'il est prévu un dispositif (16, 17, 18, 19, 15) pour masquer une flèche de direction sur la représentation cartographique projetée.

13. Appareil à cartes selon l'une quelconque des revendications 11 et 12, caractérisé en ce que l'installation de détection (26, 27) ainsi que la représentation à projeter de la flèche de direction, sont disposées sur des supports rotatifs (18, 25) cependant que ces deux supports sont susceptibles d'être entraînés en synchronisme dans le même sens.

14. Appareil à cartes selon la revendication 13, caractérisé en ce que l'installation de détection (26, 27) et le support (18) de la flèche de direction, sont montés sur un chariot (55) guidé de façon à pouvoir se déplacer linéairement dans deux directions différentes.

15. Appareil à cartes selon l'une quelconque des revendications 1 à 14, caractérisé en ce qu'il comporte un dispositif de déplacement (4, 5) pour déplacer dans deux directions différentes, un support transparent comprenant la représentation cartographique.

16. Appareil à cartes selon l'une quelconque des revendications 1 à 15, caractérisé en ce qu'il est prévu un magasin pour recevoir plusieurs supports transparents constitués par des diapositives, qui comportent les représentations cartographiques, tandis qu'il est prévu une mémoire électronique couplée avec une installation d'analyse (65, 66) de repères (84) pour l'association du support, installation dans laquelle sont stockées les informations sur la question de savoir quelle diapositive se trouve à un emplacement donné du magasin.

17. Appareil à cartes selon la revendication 16, caractérisé en ce que l'installation d'analyse (65, 66) analyse sur le support d'images (86) de la diapositive (3) des repères optiquement lisibles (90, 91, 92, 93) qui y sont contenus.

18. Appareil à cartes selon la revendication 18, caractérisé en ce que le support d'images (86) est subdivisé en plusieurs champs (87, 88, 89) pour recevoir différentes représentations cartographiques, chacun de ces champs comportant des repères optiquement analysables différents.

19. Appareil à cartes selon la revendication 16, caractérisé en ce que l'installation d'analyse, analyse des repères (84) placés sur la bordure (85) de la diapositive (3).

Fig. 1

Fig. 2

Fig. 3

Fig. 4

13